# EUROPEAN PATENT APPLICATION

(11) **EP 4 685 599 A1**
(43) Date of publication of application: **28.01.2026**
(21) Application number: 25188372.4
(22) Date of filing: 09.07.2025
(51) Int. Cl.: G05D 1/243, G05D 1/248, G05D 1/622, G05D 101/20, G05D 105/15, G05D 107/13, G05D 109/10, A01B 69/00

(54) **OBJECT DETECTION, RECORDING, AND AVOIDANCE SYSTEM, AGRICULTURAL VEHICLE INCLUDING THE OBJECT DETECTION, RECORDING, AND AVOIDANCE SYSTEM, AND RELATED METHODS**

(30) Priority: 26.07.2024 GB 202411020
(71) Applicant: AGCO International GmbH, 8212 Neuhausen am Rheinfall (CH)
(72) Inventor: CHRISTIANSEN, Martin Peter, 8930 Randers (DK); Steen, Kim Arild, Randers (DK); MUJKIC, Esma, 8930 Randers (DK); Toustrup, Viktor Johns, Randers (BE); Beck, Nicolai, Randers (DK); Langer, Thomas, Randers (DK); Whittaker, Dana Ann, Randers (DK)
(74) Representative: AGCO Intellectual Property Department

(57) **Abstract**

A guidance system for controlling operation of an agricultural vehicle. The guidance system includes at least one processor and at least one non-transitory computer-readable storage medium storing instructions thereon that, when executed by the at least one processor, cause the guidance system, during an agricultural operation, to: receive image data from an image sensor, analyze the image data to identify and classify one or more water wells depicted within the image data, receive GNSS location data, responsive to identifying and classifying one or more water wells, log location data indicating locations of the one or more water wells, and based at least partially on the image data and the logged location data, generate a geospatial map indicating locations of the one or more water wells on the geospatial map.

## Description

### CROSS-REFERENCE TO RELATED APPLICATIONS

### BACKGROUND

Challenges exist when mowing grass and weeds along roadsides, particularly due to man-made obstacles such as telecom and power boxes. These objects, often hidden in dense vegetation, pose significant risks to mowing equipment and the objects themselves. Damage to these objects can result in costly repairs and interruptions in service.

Current roadside mowing operations are essential for maintaining clear visibility for drivers and for general roadside upkeep. However, these operations are fraught with challenges. One challenge includes overgrown vegetation that can obscure important signage and reduce the line of sight for drivers, increasing the risk of accidents. Regular mowing is necessary to maintain safety but is often hindered by obstacles like telecom and power boxes. Another challenge includes hidden objects, including rocks, debris, and man-made structures such as telecommunication boxes and power boxes, that can damage mowing equipment. Damaging mowing equipment not only increases maintenance costs but also causes delays in mowing schedules. Yet another challenge includes instances where telecommunication boxes and power boxes are damaged during mowing, the damaged boxes require immediate repair to restore service. Such repairs can be disruptive and costly, as specialized technicians are needed to fix and/or replace these critical infrastructures. Yet another challenge includes mowing operations along highways that are often expensive operation due to the need for frequent mowing cycles to manage fast-growing vegetation. Costs can range significantly, and any damage to equipment or infrastructure adds to these expenses.

In summary, the primary issues include the risk of damage to mowing equipment and infrastructure, the safety hazards posed by reduced visibility, and the high operational costs associated with frequent mowing and repairs. Addressing these challenges can lead to safer, more efficient, and cost-effective roadside maintenance operations.

### BRIEF SUMMARY

Embodiments include a guidance system for controlling operation of an agricultural vehicle. The guidance system may include at least one processor and at least one non-transitory computer-readable storage medium storing instructions thereon that, when executed by the at least one processor, cause the guidance system, during an agricultural operation, to: receive image data from an image sensor, analyze the image data to identify and classify one or more water wells depicted within the image data, receive GNSS location data, responsive to identifying and classifying one or more water wells, log location data indicating locations of the one or more water wells, and based at least partially on the image data and the logged location data, generate a geospatial map indicating locations of the one or more water wells on the geospatial map.

The image sensor may include at least one of a thermal camera, a light detection and ranging (LIDAR) camera, a short wave infrared (SWIR) camera, a near infrared camera (NIR), an RGB camera, or a polarized camera.

The guidance system may include at least one additional image sensor comprising at least one of a thermal camera, a light detection and ranging (LIDAR) camera, a short wave infrared (SWIR) camera, a near infrared (NIR) camera, an RGB camera, or a polarized camera.

Analyzing the image data may include utilizing one or more machine learning models to identify and classify water wells depicted within the image data.

Analyzing the image data may include analyzing one or more heat signatures depicted within the image data.

The guidance system may further include instructions that, when executed by the at least one processor, cause the guidance system to, responsive to identifying and classifying one or more water wells, automatically, without operator input, adjust operation of the agricultural vehicle.

Generating a geospatial map indicating locations of the one or more water wells on the geospatial map may include generating a three-dimensional geospatial map.

The guidance system may further include instructions that, when executed by the at least one processor, cause the guidance system to display the generated map on an input/output device of the guidance system.

Displaying the generated map on the input/output device of the guidance system may include displaying the generated map on a display within the agricultural vehicle.

Displaying the generated map on the input/output device of the guidance system may include displaying the generated map on a display of a remote device.

Receiving image data comprises receiving LIDAR image data.

Receiving image data may include receiving image data representing different polarization states.

Identifying and classifying one or more water wells may include identifying and classifying safety poles of a water well.

Receiving image data may include receiving real-time image data.

Adjusting operation of the agricultural vehicle may include modifying a path of travel of the agricultural vehicle to avoid the object.

Receiving image data may include receiving both thermal image data and RGB image data.

The image sensor may be mounted to an extendable arm member attached to the agricultural vehicle.

The image sensor may be mounted to an extendable arm member attached to an implement.

The image sensor may be mounted to the agricultural vehicle and faces forward relative to a direction of travel and radially outward from the agricultural vehicle.

The guidance system may further include instructions that, when executed by the at least one processor, cause the guidance system to provide captured image data depicting the identified one or more water wells and the logged location data to a remote device.

Embodiments include a method of guiding operation of an agricultural vehicle during an agricultural operation. The method may include receiving, at a guidance system, image data from at least one image sensor coupled to the agricultural vehicle, based at least partially on the received image data, identifying and classifying objects depicted within the image data, receiving GNSS location data, responsive to identifying and classifying a water well, logging location data indicating a location of the identified and classified water well, and based at least partially on the image data and the logged location data, generating a geospatial map indicating the location of the water well on the geospatial map.

The at least one image sensor may include an RGB camera.

The at least one image sensor may include a polarized camera.

The method may further include providing captured image data depicting the identified water well and the logged location data to a remote device.

Identifying and classifying a water well may include identifying and classifying safety poles of a water well.

Identifying and classifying objects depicted within the image data may include utilizing one or more machine learning models to identify and classify one or more water wells depicted within the image data.

Generating a geospatial map indicating locations of the one or more water wells on the geospatial map may include generating a three-dimensional geospatial map.

One or more embodiments include an agricultural vehicle. The agricultural vehicle may include a guidance system for controlling operation of the agricultural vehicle. The guidance system may include at least one processor and at least one non-transitory computer-readable storage medium storing instructions thereon that, when executed by the at least one processor, cause the guidance system, during an agricultural operation, to: receive image data from an image sensor, based at least partially on the received image data, identify and classify objects depicted within the image data, receive GNSS location data, responsive to identifying and classifying a water well, log location data indicating a location of the identified and classified water well, and based at least partially on the image data and the logged location data, generate a geospatial map indicating the location of the water well on the geospatial map.

Other technical features may be readily apparent to one skilled in the art from the following figures, descriptions, and claims.

Within the scope of this application, it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

While the specification concludes with claims particularly pointing out and distinctly claiming what are regarded as embodiments of the present disclosure, various features and advantages may be more readily ascertained from the following description of example embodiments when read in conjunction with the accompanying drawings, in which:
FIG. 1 shows a schematic representation of an agricultural vehicle and implement having a guidance system mounted thereto according to one or more embodiments;
FIG. 2A and FIG. 2B show various schematic representations of an agricultural vehicle and implement having a guidance system and image sensor mounted thereto according to one or more embodiments;
FIG. 3A and FIG. 3B show various schematic representations of an agricultural vehicle and implement having a guidance system and image sensor mounted thereto according to one or more embodiments;
FIG. 4 shows a schematic view of a guidance system according to one or more embodiments;
FIG. 5 shows a flowchart of a method of operating an agricultural vehicle;
FIG. 6 shows an agricultural vehicle and an implement at various stages along an initial path of travel, a diverted path of travel, and a subsequent path of travel according to one or more embodiments;
FIG. 7 shows an agricultural vehicle and an implement at various stages along a first pass within a field and a second pass within the field according to one or more embodiments;
FIG. 8 shows an agricultural vehicle and an implement at various stages along an initial path of travel and a subsequent path of travel according to one or more embodiments;
FIG. 9 shows an agricultural vehicle and an implement at various stages along an initial path of travel according to one or more embodiments;
FIG. 10 shows an agricultural vehicle and an implement at various stages along an initial path of travel and a subsequent path of travel according to one or more embodiments;
FIG. 11A and FIG. 11B show various schematic representations of an implement having a first image sensor and a second image sensor mounted thereto according to one or more embodiments;
FIG. 12A and FIG. 12B show various schematic representations of an implement having a first image sensor, a second image sensor, and third image sensor mounted thereto according to one or more embodiments;
FIG. 13 shows a schematic view of a guidance system according to one or more embodiments;
FIG. 14 shows a schematic view of a guidance system according to one or more embodiments;
FIG. 15 shows a flowchart of a method of operating an agricultural vehicle;
FIG. 16 shows a flowchart of a method of operating an agricultural vehicle; and
FIG. 17 is a schematic view of a central controller according to embodiments of the disclosure.

### DETAILED DESCRIPTION

Illustrations presented herein are not meant to be actual views of any particular agricultural vehicle, implement, image sensor, guidance system, component, or system, but are merely idealized representations that are employed to describe embodiments of the disclosure. Additionally, elements common between figures may retain the same numerical designation for convenience and clarity.

The following description provides specific details of embodiments. However, a person of ordinary skill in the art will understand that the embodiments of the disclosure may be practiced without employing many such specific details. Indeed, the embodiments of the disclosure may be practiced in conjunction with conventional techniques employed in the industry. In addition, the description provided below does not include all the elements that form a complete structure or assembly. Only those process acts and structures necessary to understand the embodiments of the disclosure are described in detail below. Additional conventional acts and structures may be used. The drawings accompanying the application are for illustrative purposes only, and are thus not drawn to scale.

As used herein, the terms "comprising," "including," "containing," "characterized by," and grammatical equivalents thereof are inclusive or open-ended terms that do not exclude additional, unrecited elements or method steps, but also include the more restrictive terms "consisting of" and "consisting essentially of" and grammatical equivalents thereof.

As used herein, the singular forms following "a," "an," and "the" are intended to include the plural forms as well, unless the context clearly indicates otherwise.

As used herein, the term "may" with respect to a material, structure, feature, or method act indicates that such is contemplated for use in implementation of an embodiment of the disclosure, and such term is used in preference to the more restrictive term "is" so as to avoid any implication that other compatible materials, structures, features, and methods usable in combination therewith should or must be excluded.

As used herein, the term "configured" refers to a size, shape, material composition, and arrangement of one or more of at least one structure and at least one apparatus facilitating operation of one or more of the structure and the apparatus in a predetermined way.

As used herein, any relational term, such as "first," "second," "top," "bottom," "upper," "lower," "above," "beneath," "side," "outer," "inner," etc., is used for clarity and convenience in understanding the disclosure and accompanying drawings, and does not connote or depend on any specific preference or order, except where the context clearly indicates otherwise. For example, these terms may refer to an orientation of elements of an agricultural vehicle, an implement, a guidance system, and/or an arm member as illustrated in the drawings.

As used herein, the term "proximate," when utilized to describe positions of agricultural vehicle and/or the implement to a detected object means that the agricultural vehicle and/or the implement and a detected object are within a given distance from each other. The distance may be at least partially dependent on a size (e.g., a lateral width in a horizontal direction orthongal to a path of travel) of the agricultural vehicle and/or the implement. For example, the agricultural vehicle may be proximate the detected object when the agricultural vehicle within 20m, 10m, 5m, 2m, or 1m of the detected object. In some embodiments, the distance may be a percentage (e.g., 25%) of the overall lateral width of the agricultural vehicle and/or implement.

As used herein, the term "substantially" in reference to a given parameter, property, or condition means and includes to a degree that one skilled in the art would understand that the given parameter, property, or condition is met with a small degree of variance, such as within acceptable manufacturing tolerances. By way of example, depending on the particular parameter, property, or condition that is substantially met, the parameter, property, or condition may be at least 90.0% met, at least 95.0% met, at least 99.0% met, or even at least 99.9% met.

As used herein, the term "about" used in reference to a given parameter is inclusive of the stated value and has the meaning dictated by the context (e.g., it includes the degree of error associated with measurement of the given parameter, as well as variations resulting from manufacturing tolerances, etc.).

As used herein, the term "and/or" includes any and all combinations of one or more of the associated listed items.

Some embodiments include a guidance system that utilizes one or more image sensors mounted to an agricultural vehicle and/or implement by way of an extendable arm or mounting. The one or more image sensors may face forward and/or radially outward (e.g., horizontally angled from a forward direction) from the agricultural vehicle and/or implement. The guidance system may analyze the image data captured by the one or more image sensors to detect and classify objects of interest (e.g., telecommunication boxes, power boxes, roadside markers, water wells, well markers, vegetation, refuse, etc.). Responsive to detection of an object of interest, the guidance system may output one or more alarms and may log a location of the detected object of interest with a database utilizing received GNSS location data.

Some embodiments include a guidance system that adjusts (e.g., adjust automatically, without operator input) operation of the agricultural vehicle and/or the implement based on the detected objects of interest. For instance, responsive to detection of one or more objects of interest, the guidance system may automatically disengage a power take-out (PTO) control to stop one or more operations of the implement (e.g., stop a mower blade). As another example, adjusting operation of the agricultural vehicle and/or the implement may include actuating one or more hydraulic valves of the agricultural vehicle and/or the implement. For example, adjusting operation of the agricultural vehicle and/or the implement may include actuating one or more hydraulic valves to change an orientation and/or position of the implement (e.g., lift a mower).

Some embodiments include a guidance system that utilizes image data received from image sensors to detect water wells in conjunction with safety poles associated with the water wells. The guidance system integrates perception image sensors and GNSS location data to identify the water wells and/or safety poles and log locations of the water wells and/or safety poles.

Some embodiments include a guidance system that utilizes image data received from image sensors to detect traffic reflective markers along roadsides. The guidance system integrates perception image sensors and object detection methods to detect traffic reflective markers and determine conditions of the detected traffic reflective markers. For instance, the guidance system may determine a quality/condition of reflective surfaces of the detected traffic reflective markers and any structural damage of the detected traffic reflective markers. The guidance system may log locations and conditions of the detected traffic reflective markers. The guidance system may further use the image data to create geospatial maps highlighting areas where markers need attention, facilitating targeted maintenance.

Some embodiments include a guidance system that utilizes image data received from image sensors to identify, classify, and map vegetation within a given area (e.g., along a roadside). The guidance system may identify both desirable and invasive species. The guidance system may integrate perception image sensors and GNSS location data to generate geospatial maps of vegetation distribution within the given area (e.g., along roadsides). The generated maps may assist in managing the spread of invasive species, while promoting the growth of desired species to enhance biodiversity.

Some embodiments include a guidance system that utilizes image data received from image sensors to identify, classify, and map refuse (e.g., garbage) within a given area (e.g., along a roadside). The guidance system may identify refuse such as plastic bottles, cola cans, bicycles, plastic bags, beer cans, and other debris. The guidance system may integrate perception image sensors and GNSS location data to generate geospatial maps of refuse distribution within the given area (e.g., along roadsides). The generated maps may assist in identifying concentrations of refuse and planning targeted cleanup efforts to maintain cleaner and safer roadsides.

Some embodiments include a guidance system that utilizes image data received from image sensors and LIDAR data from a LIDAR sensor (e.g., camera) to identify, classify, and map objects of interest within a given area (e.g., along a roadside). The guidance system may integrate perception image sensors, LIDAR sensors, and GNSS location data to generate three-dimensional maps of the given area (e.g., along roadsides). The system combines object detection for known objects and anomaly detection for unknown objects, logging the objects' locations and associated images for review by remote operators.

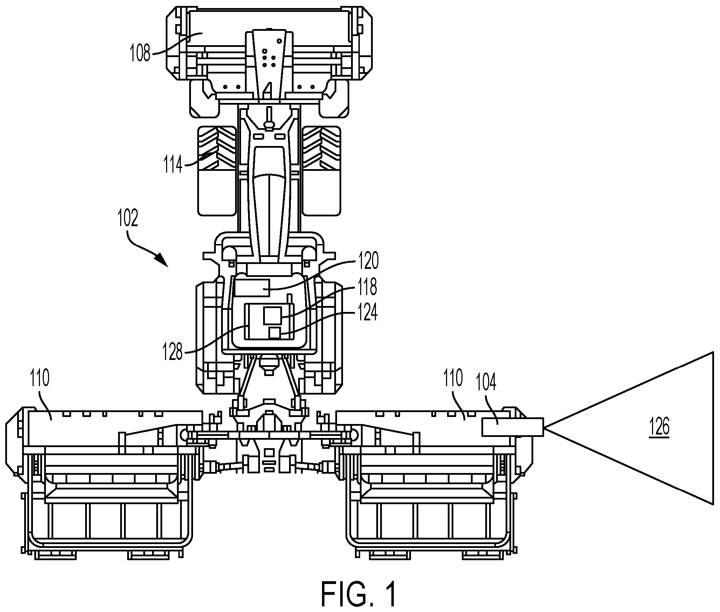

FIG. 1 is a simplified top view of an agricultural vehicle 102 (e.g., a tractor) and an implement 122 including a front mower 108 coupled to a front of the agricultural vehicle 102, and two side mowers 110 coupled to the agricultural vehicle 102 in locations behind and at least partially offset from a longitudinal axis of the agricultural vehicle 102 in direction orthogonal to the longitudinal axis. For instance, the two side mowers 110 may be coupled to a hitch of the agricultural vehicle 102 via one or more mounting structures. The agricultural vehicle 102 may be supported by wheels 114 and/or tracks. Furthermore, while the implement 122 is depicted and described as including mowers, the disclosure is not so limited, and the embodiments described herein are equally applicable to other implements such as, for example, seeders, sprayers, planters, cultivators, etc.

The agricultural vehicle 102 may further include a control system 128 in, for example, a cab of the agricultural vehicle 102. The control system 128 may include or be operably coupled to a guidance system 118 (e.g., a guidance system application) and at least one input/output device 120 (e.g., a display). The control system 128 may be configured to control one or more operations and devices of the agricultural vehicle 102 and/or the implement 122. In some embodiments, the guidance system 118 may further include one or more image sensors 104 mounted to the agricultural vehicle 102 and/or the implement 122. The image sensors 104 may be operably coupled to the guidance system 118 of the control system 128 and may be at least partially operated by the guidance system 118. As is described in further detail below, the image sensors 104 may capture image data (e.g., image/video data) of an environment around the agricultural vehicle 102 while the agricultural vehicle 102 and/or the implement 122 are performing an agricultural operation (e.g., mowing operations). Furthermore, the guidance system 118 may utilize the image data captured by the image sensors 104 to detect objects (e.g., telecommunication boxes, safety poles, power boxes, road markers, road signs, etc.) and/or other obstacles depicted in the image data and adjust or recommend adjustment of operation of the agricultural vehicle 102 and/or the implement 122 subsequent to detection of the object. As depicted in FIG. 1, each image sensor 104 may have a respective field of view 126. The field of view 126 may refer to an angular extent of an observable scene that a given image sensor 104 can capture.

Additionally, in some embodiments, the guidance system 118 may include or may be in communication with a global navigation satellite system ("GNSS 124"). For instance, in some embodiments, the agricultural vehicle 102 may include a separate GNSS 124, and the GNSS 124 may be in operable communication with the guidance system 118. The GNSS 124 may operate in conventional manners and may provide GNSS data to the guidance system 118.

The input/output device 120 may allow an operator of the agricultural vehicle 102 to provide input to, receive output from, and otherwise transfer data to and receive data from guidance system 118 of the control system 128. The input/output device 120 may include one or more of a mouse, a keypad or a keyboard, a joystick, a touch screen, a camera, an optical scanner, network interface, modem, a microphone, other known I/O devices or a combination of such I/O interfaces. The input/output device 120 may include one or more devices for presenting output to an operator, including, but not limited to, a graphics engine, a display (e.g., a display screen), one or more output drivers (e.g., display drivers), one or more audio speakers, and one or more audio drivers. In certain embodiments, the input/output device 120 is configured to provide graphical data to a display for presentation to an operator. The graphical data may be representative of one or more graphical user interfaces and/or any other graphical content as may serve a particular implementation. As is described in greater detail below, the control system 128 and the input/output device 120 may be utilized to display data (e.g., images and/or video data) received from the guidance systems 118 and provide one or more recommendations of adjusting operation of the agricultural vehicle 102 and/or the implement 122 and/or video data to assist an operator in navigating the agricultural vehicle 102 and implement 122. The control system 128 is described in greater detail below in regard to FIG. 18.

Referring still to FIG. 1, while the guidance system 118 is described as being part of the control system 128 of the agricultural vehicle 102, the disclosure is not so limited. Rather, the guidance system 118 may be part of (e.g., operated on) another device in communication with the control system 128 of the agricultural vehicle 102. In further embodiments, the guidance system 118 may be part of one or more servers or remote devices in communication with the control system 128.

Additionally, while FIG. 1 shows the guidance system 118 as being part of and/or utilized in relation to operation of a tractor, the disclosure is not so limited. Rather, the guidance system 118 may be part of and/or utilized in relation to operation of any agriculture vehicle (e.g., a combine) and/or implement 122.

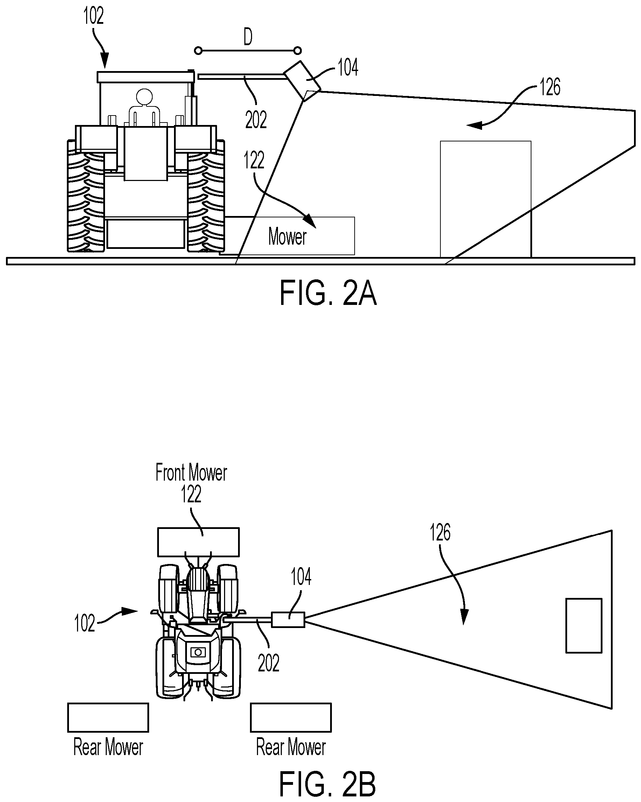

FIG. 2A is a rear schematic view of an agricultural vehicle 102 and an implement 122 (e.g., a mower) with an image sensor 104 coupled to the agricultural vehicle 102. FIG. 2B is a top schematic view of the agricultural vehicle 102, the implement 122, and the image sensor 104 of FIG. 2A.

Referring to FIG. 2A and FIG. 2B together, the image sensor 104 may be coupled to the agricultural vehicle 102 by way of an arm member 202. The arm member 202 may extend laterally outward from the agricultural vehicle 102 in a direction orthogonal to a direction of travel of the agricultural vehicle 102. Furthermore, the image sensor 104 may be coupled a longitudinal end of the arm member 202 opposite the agricultural vehicle 102. Additionally, the image sensor 104 may be coupled to the arm member 202 such that the field of view 126 includes an angled downward view of the environment (e.g., ground and vegetation) around the agricultural vehicle 102.

In some embodiments, the arm member 202 may be coupled to a top of a cabin of the agricultural vehicle 102. In additional embodiments, the arm member 202 may be mounted to any of a bottom surface, a top surface, a side surface, or a longitudinal end surface of the agricultural vehicle 102. In one or more embodiments, the arm member 202 may be pivotally (e.g., rotatably) coupled to the agricultural vehicle 102 such that the arm member 202 may be manual rotated about a connection (e.g., a longitudinal end connected) to the agricultural vehicle 102. In some embodiments, the arm member 302 may include one or more actuators that are operably coupled to the guidance system 118 of the control system 128. The one or more actuators may facilitate manipulation of a position of the arm member 202, and as a result, the field of view 126 of the image sensor 104. In some embodiments, the one or more actuators may be capable of rotating the arm member 202 about at least two axes (e.g., an X-axis and a Z-axis). The one or more actuators may include one or more mechanical/electromechanical actuators (e.g., linear actuators and/ rotary actuators). In some embodiments, the actuators may be operated and controlled by the guidance system 118.

In one or more embodiments, the arm member 202 may include a telescopic arm and may be configured to extend and retract relative to the agricultural vehicle 102. In some embodiments, the arm member 202 may be rotatably coupled to the frame agricultural vehicle 102 at a longitudinal end of the arm member 202. In some embodiments, the arm member 202 may be configured to pivot and rotate about at least one axis relative to the agricultural vehicle 102. In some embodiments, the arm member 202 may be both telescopic and rotatably coupled to the agricultural vehicle 102. In some embodiments, the one or more actuators may be operably coupled to the guidance system 118 of the control system 128 and, responsive to instructions, may cause the arm member 202 to extend, retract, and/or rotate in order to manipulate a position and orientation of the image sensor 104 relative to the agricultural vehicle 102. In some embodiments, the arm member 202 may be removably coupled to the agricultural vehicle 102.

In some embodiments, a distance (D) between the image sensor 104 and the agricultural vehicle 102 (i.e., a longitudinal length of the arm member 202 may be selected and known. For example, in some embodiments, the distance (D) between the image sensor 104 and the agricultural vehicle 102 may be within a range of about 1.5m and about 3.5m. For instance, the distance (D) may be about 2.5m. By knowing a distance between the image sensor 104 and the agricultural vehicle 102, where the arm member 202 is coupled to the agricultural vehicle 102, an orientation of the arm member 202 relative to the agricultural vehicle 102, and an orientation of the image sensor 104 relative to the arm member 202, an orientation of the field of view 126 of the image sensor 104 relative to the agricultural vehicle 102 and/or an associated implement 122 may be determined and/or known by the guidance system 118.

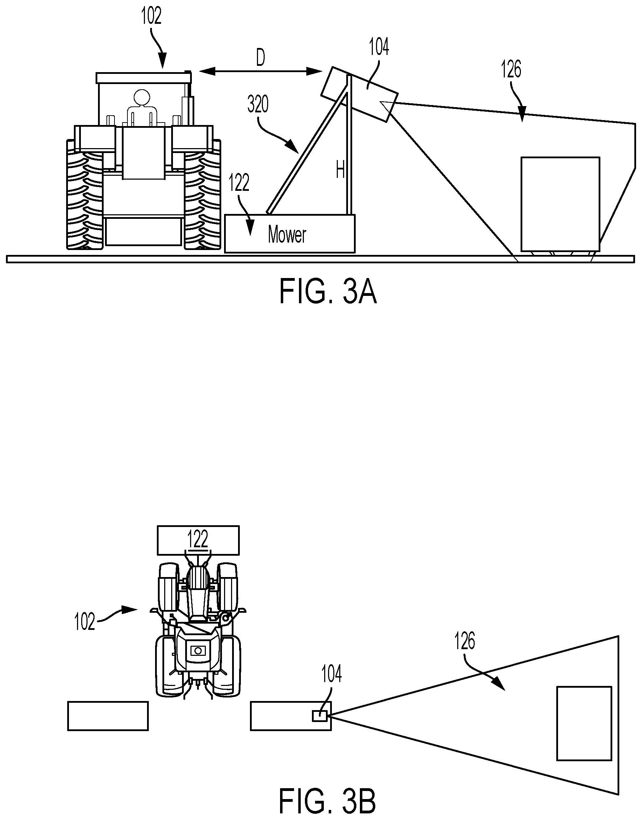

FIG. 3A is a rear schematic view of an agricultural vehicle 102 and an implement 122 (e.g., a mower) with an image sensor 104 coupled to the agricultural vehicle 102. FIG. 3B is a top schematic view of the agricultural vehicle 102, the implement 122, and the image sensor 104 of FIG. 3A.

Referring to FIG. 3A and FIG. 3B together, the image sensor 104 may be coupled to the implement 122 by way of a frame 320 mounted to the implement 122. The frame 320 may extend upward from the implement 122. Additionally, the image sensor 104 may be coupled to the frame 320 in manner and is oriented such that the field of view 126 includes an angled downward view of the environment (e.g., ground and vegetation) around the agricultural vehicle 102.

In some embodiments, the frame 320 may include one or more of the arm members 202 and/or actuators described above, and the arm members 202 and/or actuators may be utilized via any of the manners described herein to manipulate an orientation and a location of the image sensor 104 relative to the agricultural vehicle 102 and/or implement 122.

In some embodiments, the distance (D) between the image sensor 104 and the agricultural vehicle 102 (i.e., a longitudinal length of the arm member 202) may be selected and known via any of the manners described herein. Furthermore, a height (H) at which the image sensor 104 is mounted above the implement 122 via the frame 320 may be selected and known via any of the manners described herein in regard to the distance (D).

By knowing a distance between the image sensor 104 and the agricultural vehicle 102, where the frame 320 is mounted to the implement 122, where the image sensor 104 is mounted on the frame 320, the (H) at which the image sensor 104 is mounted above the implement 122, and an orientation of the image sensor 104 relative to the frame 320, an orientation of the field of view 126 of the image sensor 104 relative to the agricultural vehicle 102 and/or an associated implement 122 may be determined and/or known by the guidance system 118.

Referring to FIG. 3A and FIG. 3B together, the image sensor 104 may include an RGB camera. In further embodiments, the image sensor 104 may include a thermal camera. For example, the image sensor 104 may include a long-wave infrared (LWIR) camera. In additional embodiments, the image sensor 104 may include one or more of a mid-wave infrared (MWIR) camera, a short-wave infrared (SWIR) camera, a near infrared (NIR) camera, an ultraviolet camera (UV camera), or a visible light camera with an infrared filter. In yet further embodiments, the image sensor 104 may include a light detection and ranging (LIDAR) sensor (e.g., camera).

In some embodiments, the image sensor 104 may include a polarized camera (e.g., a polarized NIR, RGB, or SWIR camera). In particular, the image sensor 104 may include one or more polarization filters that separate incoming light into polarized components. Furthermore, the polarized camera may include micro-polarizers integrated directly on the image sensor portion of the polarized camera that filter the incoming light for each detected pixel based on the pixel's polarized state (e.g., 0°, 45°, 90°, 135°). In one or more embodiments, the polarized camera may be configured to capture multiple images simultaneously with each captured image correlated to a different polarization state. Moreover, one or more algorithms may be utilized to process the images captured at different polarizations and generate relatively detailed images that can highlight features not typically visible in standard intensity-based imaging.

Furthermore, the image sensor 104 may be configured to capture image data including one or more of relatively high resolution color images/video, relatively high resolution infrared images/video, or light detection and ranging data. In some embodiments, the image sensor 104 may be configured to capture image data at multiple focal lengths. In some embodiments, the image sensor 104 may be configured to combine multiple exposures into a single high-resolution image/video. In some embodiments, the image sensor 104 may include multiple image sensors (e.g., cameras) with fields of view 126 facing different directions. For instance, a first image sensor may generally face forward (e.g., in a direction of travel), and a second image sensor may generally face downward toward a soil surface in a direction orthongal to a direction of travel of the agricultural vehicle 102.

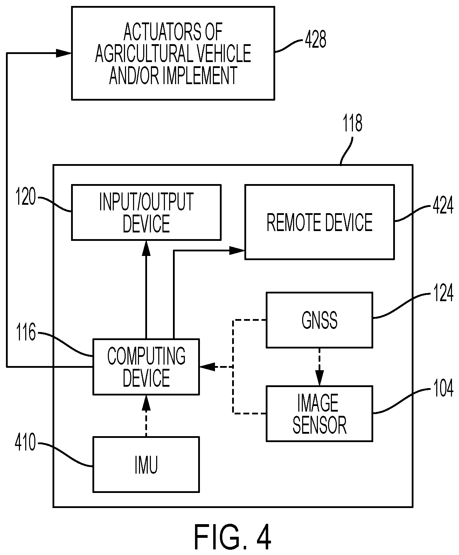

FIG. 4 is a schematic view of the guidance system 118 according to one or more embodiments of the disclosure. As noted above, the guidance system 118 may include the image sensor 104 and the GNSS 124. Additionally, in one or more embodiments, the guidance system 118 may include a computing device 116, the input/output device 120, a remote device 424, and, optionally, an inertial measurement unit 410 (IMU 410). The GNSS 124, the image sensor 104, the input/output device 120, the remote device 424, and the inertial measurement unit 410 may be in operable communication with computing device 116 and may be configured to provide data to and/or receive data and/or signals from the computing device 116. In additional embodiments, the image sensor 104, the GNSS 124, the remote device 424, and/or the inertial measurement unit 410 may be separate and distinct from the guidance system 118 and may be in operable communication with the computing device 116 of the guidance system 118. The computing device 116 may be further operably coupled to actuators 428 of the agricultural vehicle 102 and/or the implement 122. The actuators 428 may include hydraulic valves, power switches, and/or any other known actuators for controlling operation of agricultural vehicles and/or implements.

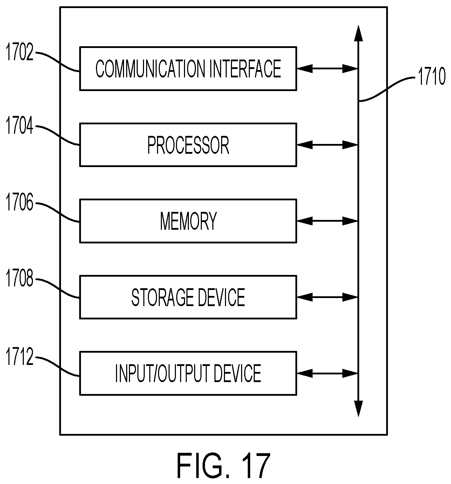

As is described in greater detail below, the computing device 116 may include a communication interface, a processor, a memory, a storage device, the input/output device 120, and a bus. The computing device 116 is described in greater detail in regard to FIG. 17.

The remote device 424 can represent various types of computing devices with which users can interact. For example, the remote device 424 can be a mobile device (e.g., a cell phone, a smartphone, a PDA, a tablet, a laptop, a watch, a wearable device, etc.). In some embodiments, however, the remote device 424 can be a non-mobile device (e.g., a desktop or server). In some embodiments, the remote device 424 includes one or more servers (e.g., computer or software systems) configured to provide services, data, or resources to other computers over a network.

In some embodiments, the inertial measurement unit 410 may include a device that is configured to measure and output specific force, attitude, velocity, angular rate, and/or an orientation of a moving object (e.g., the agricultural vehicle 102) relative to a reference frame. The inertial measurement unit 410 may combine accelerometers (for linear acceleration) and gyroscopes (for rotational rate) to determine the object's motion. In one or more embodiments, the inertial measurement unit 410 may also include one or more magnetometers for heading reference. As noted above, the inertial measurement unit 410 may be operably coupled to the computing device 116 and may provide measured and/or calculated data to the computing device 116.

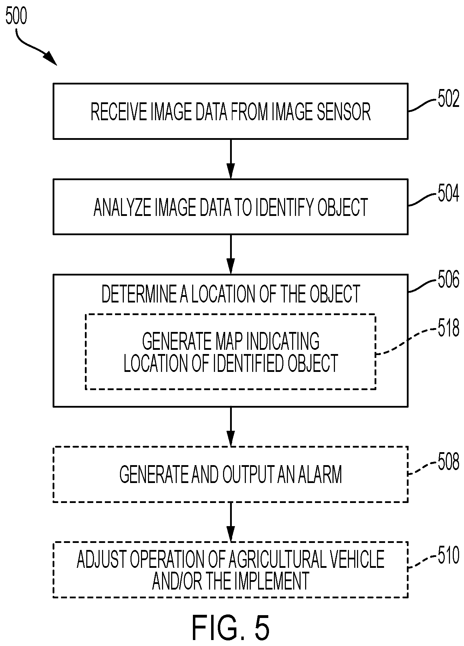

FIG. 5 shows a flowchart of a method 500 of controlling operation an agricultural vehicle (e.g., a tractor) and/or an implement 122 during an agricultural operation (e.g., a mowing operation, a planting operation, a harvesting operation, etc.) according to one or more embodiments of the disclosure. In one or more embodiments, the guidance system 118 may perform one or more acts of the method 500. Additionally, in some embodiments, one or more acts of the method 500 may be performed by the control system 128 of the agricultural vehicle 102, and/or the remote device 424.

In some embodiments, the method 500 may include receiving image data from image sensor 104, as shown in act 502 of FIG. 5. For example, the computing device 116 of the guidance system 118 may receive the image data from the image sensor 104. In one or more embodiments, the image sensor 104 may include any of the image sensors described herein. For instance, the image sensor 104 may include a polarized RGB camera, and the image data may include polarized RGB image data. Likewise, the image sensor 104 may include an NIR camera, and the image data may include NIR image data.

In additional embodiments, the image data may include thermal image data. For example, the image data may include thermal image data that includes thermograms that represent variations in infrared emissions across an observed environment. Furthermore, each pixel of the thermal image data may correspond to a specific temperature value. In some embodiments, the thermal image data may include an applied color palette such that each color of the thermal image data represent a temperature range. For instance, cooler areas represented in the thermal image data may be represented by shades of blue, and hotter areas represented in the thermal image data may be represented by shades of red.

Responsive to receiving the image data, the method 500 may include analyzing the image data to identify and classify objects depicted within the image data, as shown in act 504 of FIG. 5. For example, the computing device 116 of the guidance system 118 may analyze the image data to identify objects depicted in the image data. In some embodiments, the guidance system 118 may identify and classify objects by determining bounding boxes (e.g., a point, width, and height) of the detected objects, and based on the bounding boxes, the guidance system 118 may identify and classify the detected objects. In additional embodiments, the guidance system 118 may identify and classify objects by performing object segmentation (e.g., object instance segmentation or sematic segmentation) to associate specific pixels of the image data with the detected one or more objects. In further embodiments, the guidance system 118 may classify (e.g., label) the detected objects according to determined object types.

In some embodiments, analyzing the image data to identify and classify objects depicted within the image data may include analyzing the image data to identify objects of interest. In some embodiments, the objects of interest may include man-made obstacles that pose risks of damaging the agricultural vehicle 102 and/or the implement 122 and objects that may result in relatively costly repairs and interruptions in services provided when damaged. For example, objects of interest may include telecommunication boxes, safety poles, power boxes (e.g., pad-mounted transformers), road markers (e.g., reflective markers), road signs, water wells, etc.

In additional embodiments, the objects of interest may include vegetation. For instance, the objects of interest may include invasive species of vegetation, such as, for example hogweed (e.g., Heracleum mantegazzianum, Heracleum sosnowskyi, Heracleum persicum) and ragweed. Additionally, the objects of interest may include desired species of vegetation.

In further embodiments, the objects of interest may include refuse and/or trash. For example, the objects of interest may include plastic bottles, cola cans, bicycles, plastic bags, beer cans, and other debris.

In some embodiments, the image data may be analyzed via deep learning techniques (e.g., deep neural networks) to identify and classify the objects within the image data. For example, the guidance system 118 (e.g., the computing device 116) may utilize one or more of DNN instance models, convolutional neural networks (CNNs), single shot detectors (SSDs), region-convolutional neural networks (R-CNNs), Faster R-CNN, Region-based Fully Convolutional Networks (R-FCNs) and other machine learning models to perform the object detection/identification and classification. In some embodiments, analyzing the image data may be performed utilizing one or more other or additional algorithms or models, such as, a YOLO (You Only Look Once) algorithm, Single Shot MultiBox Detector, EfficientDet, RetinaNet, DeepLab, U-Net, or MobileNet.

Any of the foregoing models may be trained to perform object detection/identification and classification. For example, in some embodiments, the models may be trained using a combination of real image data (e.g., image data captured via one or more image systems) and synthetic data (e.g., data that is artificial generated using algorithms and/or computer simulations). In some embodiments, the synthetic data may include image data depicting objects of interest (e.g., telecommunication boxes, safety poles, power boxes, road markers, road signs, etc.) with differing environments (e.g., types, amounts, and heights of vegetation, occlusion levels, light configurations, viewing angles and types (e.g., fisheye and perspective)).

In some embodiments, analyzing the image data may further include analyzing thermal image data to identify and classify objects. For example, analyzing the image data may include analyzing the image data to identify heat signatures. For example, the computing device 116 of the guidance system 118 may analyze the image data to identify heat signatures depicted in the image data. In particular, the image data may be analyzed to identify unique patterns of infrared radiation (i.e., heat signatures) emitted by objects and living organisms and depicted in the thermal image data. The heat signatures correspond to varying levels of heat energy.

Additionally, the identified heat signatures may be analyzed to determine a presence and a type of an object. For example, the computing device 116 of the guidance system 118 may analyze the identified heat signatures to determine a presence and a type of an object depicted in the image data. In some embodiments, analyzing the identified heat signatures to determine a presence and a type of an object includes distinguishing living organisms from other heat-emitting objects. For example, distinguishing living organisms from other heat-emitting objects may include distinguishing the heat signature based on one or more of a size, a shape, or a heat pattern (e.g., the distribution of detected thermal energy (e.g., heat) across the heat signature) of the heat signatures Furthermore, in one or more embodiments, analyzing the identified heat signatures includes identifying types of living organisms and/or objects depicted in the image data. For example, analyzing the identified heat signatures may include identifying any of the objects of interest described herein depicted in the image data.

The heat signatures of the image data may be analyzed via deep learning techniques to determine presences and types of objects depicted within the image data. For example, the guidance system 118 (e.g., the computing device 116) may utilize one or more of convolutional neural networks (CNNs), single shot detectors (SSDs), region-convolutional neural networks (R-CNNs), Faster R-CNN, Region-based Fully Convolutional Networks (R-FCNs) and other machine learning models to perform the heat signature (e.g., object) detection and classification. The foregoing models may be trained according to conventional methods to perform the heat signature detection and classification. In some embodiments, the guidance system 118 may determine bounding boxes (e.g., a point, width, and height) of the detected one or more heat signatures, and based on the bounding boxes, classify the heat signatures as a present object and a type of object. For instance, in some embodiments, sizes, shapes, and heat patterns of the heat signatures may be utilized to classify a type of object. In additional embodiments, the guidance system 118 may perform object segmentation (e.g., object instance segmentation or sematic segmentation) to associate specific pixels of the heat signatures of image data with the one or more detected objects.

In some embodiments, analyzing the image data and the heat signatures may be performed utilizing one or more other or additional algorithms or models, such as, a YOLO (You Only Look Once) algorithm, Falzenszwalb Segmentation, DeepLab, U-Net, or MobileNet.

In some embodiments, analyzing the image data to identify and classify objects depicted within the image data may include identifying safety poles of water wells and/or water wells themselves.

In one or more embodiments, analyzing the image data to identify and classify objects depicted within the image data may include identifying traffic reflective markers along roadsides. Furthermore, analyzing the image data to identify and classify objects depicted within the image data may include determining a condition of the identified reflective markers. For instance, determining a condition of the identified reflective markers may include assessing a reflectiveness and a structural integrity of each identified reflective marker. In one or more embodiments, the reflectiveness condition of the identified reflective may be determined by comparing a determined reflectiveness to a threshold reflectiveness level. In some embodiments, assessing a structural integrity may include identifying structural damage to the identified reflective markers.

In some embodiments, analyzing the image data to identify and classify objects depicted within the image data may include analyzing the image data to identify and classify vegetation types depicted within the image data and distinguishing between invasive and desirable species. For example, the guidance system 118 (e.g., the computing device 116) may identify the depicted vegetation and classify the depicted vegetation into categories such as invasive species (e.g., hogweed, ragweed) and desirable local plants (e.g., grass, clover).

In one or more embodiments, analyzing the image data to identify and classify objects depicted within the image data may include analyzing the image data to identify and classify refuse (e.g., garbage) depicted in the image data. For example, the guidance system 118 (e.g., the computing device 116) may identify the depicted refuse and classify the depicted refuse into categories such as plastic bottles, soda cans, bicycles, plastic bags, beer cans, food wrappers, glass bottles, tires, metal scraps, cardboard boxes, etc.

Responsive to detecting one or more objects that are classified as an object of interest (e.g., a telecommunication box, a safety pole, a power box, a road marker, a road sign, etc.), the method 500 may include determining a location of the detected object, as shown in act 506 of FIG. 5. For example, the guidance system 118 (e.g., the computing device 116) may determine the location of a detected object. In some embodiments, the location may include coordinates. For example, the coordinates may include global coordinates (e.g., latitude and longitude). In additional embodiments, the coordinates may be localized coordinates (e.g., X and Y location within a given field) and may be relative to a local or unique map.

In some embodiments, determining the location of the detected object may optionally include receiving location data from the GNSS 124, and determining the coordinates of the detected object may be based at least partially on the received location data. For example, the GNSS 124 includes a receiver that receives ranging codes and navigation data during the agricultural operation and determines a global location of the receiver (e.g., the agricultural vehicle 102) at one or more points during the agricultural operation and/or continuously during the agricultural operation. In some embodiments, relatively high-precision location data from a Real-Time Kinematic Global Navigation Satellite System (RTK-GNSS) may be received. Accordingly, in one more embodiments, the guidance system 118 may utilize the location data received from the GNSS 124 (e.g., an RTK-GNSS) and a known field of view 126 of the image sensor 104, as described above in regard to FIG. 2A through FIG. 3B, to determine a location (e.g., coordinates) of the detect object.

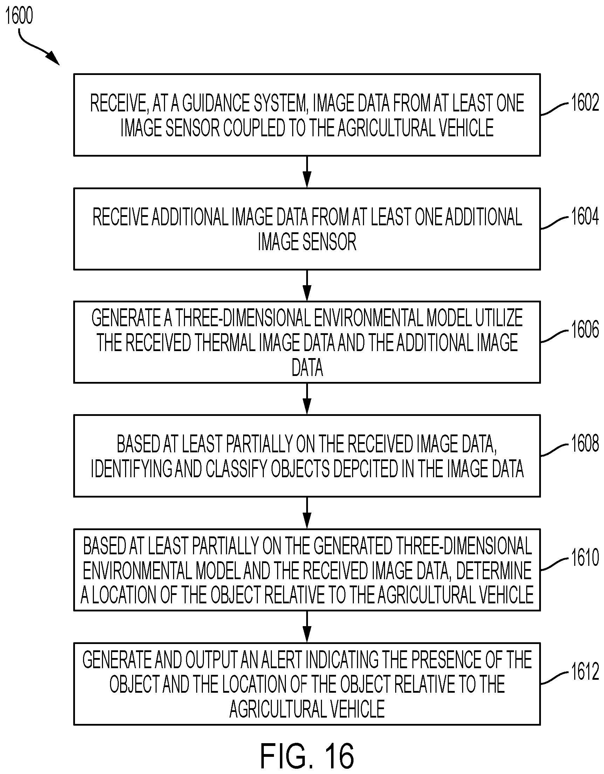

In one or more embodiments, as are described below in regard to FIG. 16, location data from a GNSS 124 may not be utilized and a location of the object may only be determined relative to the agricultural vehicle 102 and/or implement 122 utilizing the image data and, optionally, navigational data from the inertial measurement unit 410 (described below).

In some embodiments, determining the location of the detected object may further include generating a map (e.g., geospatial map, digital map) and mapping (i.e., indicating) the detected object on generated map, as shown in act 518 of FIG. 5. For example, the guidance system 118 may generate the map (e.g., geospatial map, digital map) and map (i.e., indicate) the detected object on generated map. In one or more embodiments, determining the location of the detected object may include generating a geofence (e.g., a virtual boundary and/or perimeter) around the detected object. For instance, the guidance system 118 may generate a geofence within a digital map utilized to guide a path of travel of the agricultural vehicle (e.g., an agricultural vehicle 102). In some embodiments, a mapping software may be utilized to generate the geofence. The geofence may have a square, polygon, oval, circle, or irregular shape.

In one or more embodiments, determining the location of the object may optionally include receiving navigational data from the inertial measurement unit 410 and determining the location of the object based at least partially on the received navigational data. For example, the guidance system 118 (e.g., the computing device 116 of the guidance system 118) may receive the navigational data from the inertial measurement unit 410. In some embodiments, the navigational data may include one or more of specific force data, attitude data, velocity data, angular rate data, and/or an orientation data of the agricultural vehicle (e.g., the agricultural vehicle 102) and/or the implement 122 relative to a reference (e.g., ground surface). The inclusion of navigational data from the inertial measurement unit 410 may enhance the guidance system's 118 accuracy and reliability by providing additional data on orientation, velocity, and gravitational forces, which may help in compensating for any GNSS signal degradation due to environmental factors.

Responsive to determining the location of the object of interest, the classification and location of the object of interest may be logged (e.g., stored) within the memory of the guidance system 118. For example, the GNSS coordinates may be logged within a database of the guidance system 118, and the stored location of the object of interest may be utilized in subsequent agricultural operations to trigger alarms.

As noted above, in some embodiments, determining the location of the detected object of interest may further include mapping the detected object of interest on a map (e.g., a digital map) utilized by the guidance system 118. For example, the guidance system 118 may generate a map of an area for which image data was captured and analyzed. Furthermore, the guidance system 118 may provide indications (e.g., markers) on the generated map of the locations of detected objects of interest and, in some instances, the conditions of the detect objects of interest. For example, in the case of detected reflective markers, conditions of the detected reflective markers may be indicated on the map. The conditions may be indicated by way of one or more of colors, icons, text boxes, etc. The generated map may highlight objects of interest that need repair and/or replaced.

In some embodiments, generating a map of the area of which image data was captured and analyzed may include generating a map (e.g., geospatial map) depicting a distribution of vegetation types (e.g., invasive species and desired species of vegetation) throughout a given area. The generated map may highlight areas requiring intervention to control invasive species and/or promote desired plants. Furthermore, recommendations based on the identified vegetation may be provided for targeted actions to enhance biodiversity.

In some embodiments, generating a map of the area of which image data was captured and analyzed may include generating a map (e.g., geospatial map) depicting a distribution of refuse (e.g., garbage) throughout a given area. The generated map may indicate the locations and types of each detected piece of refuse (e.g., garbage). Furthermore, recommendations based on the identified refuse (e.g., concentrations and types of garbage) may be provided for targeted actions to clean up the refuse and prevent future littering.

Additionally, responsive to determining or having logged a location of an object of interest, the method 500 may optionally include generating and outputting an alarm, as shown in act 508 of FIG. 5. In some embodiments, the guidance system 118 may generate and output the alarm.

In one or more embodiments, the alarm may be generated and output responsive to a new object of interest being detected during the given (e.g., current) agricultural operation. As a non-limiting example, when a new (e.g., previously unknown) object of interest (e.g., telecommunication box) is detected, the guidance system 118 may generate and output an alarm.

In some embodiments, the alarm may be generated and output responsive to a previously known location of an object of interest (e.g., pre-recorded GNSS location of the object of interest) and determining that the agricultural vehicle 102 approaching an area of the known location of the object of interest during an agricultural operation. For example, a location of the object of interest may have been previously determined during a previous agricultural operation, and the location of the object may be stored within the memory (e.g., database) of the guidance system 118 (e.g., marked on a map utilized by the guidance system). Furthermore, when the agricultural vehicle 102 approaches (e.g., comes within a given distance (e.g., 5m, 10m, 20m)) of the object of interest, the guidance system 118 may generate and output an alarm.

In one or more embodiments, the alarm may include an audible alarm output by the input/output device 120 (e.g., a speaker) of the guidance system 118. In additional embodiments, the alarm may include a visual alarm (e.g., ribbon, popup, etc.) on the input/output device 120 (e.g., display) of the of the guidance system 118. In some instances, the alarm may include displaying captured image data, either live or previously recorded image data, of the object of interest on the input/output device 120 (e.g., display) of the of the guidance system 118. In one or more embodiments, the alarm may include displaying a generated map and a location of the object of interest on the map and/or a location of the object of interest relative to the agricultural vehicle 102. In some embodiments, the alarm may include both an audible alarm and a visual alarm. In some embodiments, the alarm may be output on the remote device 424 (e.g., on the remote device 424 for viewing and/or hearing by a remote operator).

Referring still to act 508, providing alarms based on detected objects of interest and based on previously detected objects of interest (i.e., known locations of objects of interest), the guidance system 118 provides a dual trigger system, which increases the likelihood that an alarm is output when the agricultural vehicle 102 is proximate an object of interest. As a result, the guidance system 118 of the present disclosure reduces the likelihood of collisions with objects of interest and equipment damage.

Additionally, the method 500 may optionally include, responsive to determining a position of the object of interest, adjusting operation of the agricultural vehicle and/or the implement, as shown in act 510 of FIG. 5. For example, the guidance system 118 (e.g., the computing device 116 of the guidance system 118) may adjust operation and/or send signals to the control system 128 to adjust operation of the agricultural vehicle and/or the implement 122.

In some embodiments, adjustment to operation of the agricultural vehicle 102 and/or the implement 122 may not happen immediately. For example, the object of interest may be detected in an area where a subsequent (e.g., later) pass of the agricultural vehicle 102 will occur during the agricultural operation. As a result, adjustment to the operation of the agricultural vehicle 102 may occur when a path of travel (e.g., an intended and/or planned path of travel) will intersect with or cause the agricultural vehicle 102 to come within a given distance of the object of interest and/or geofence around the object of interest. In some embodiments, the given distance may be about 1.0 m, 2.0m, 5m, 10m, 20m, or more. In some instances, the given distance may be determined based on a size (e.g., width) of the agricultural vehicle 102 and/or implement 122. Furthermore, the agricultural vehicle 102, for the purposes of the present disclosure, may be considered "proximate" to the objects of interest and/or geo fence when it approaches one of the above-listed distances or any distance between.

In one or more embodiments, adjustment to operation of the agricultural vehicle 102 and/or the implement 122 may happen during a subsequent agricultural operation. For instance, the digital map generated by the guidance system 118 and including locations of detected objects of interest may be utilized during subsequent agricultural operations to adjust operation of the agricultural vehicle 102 and/or during planning (e.g., path planning) of the subsequent agricultural operations.

In some embodiments, adjusting operation of the agricultural vehicle 102 and/or the implement 122 may include cutting power to the implement 122. For example, adjusting operation of the agricultural vehicle 102 and/or the implement 122 may include disengaging a power take-out (PTO) control to stop one or more operations of the implement 122 (e.g., stop a mower blade). In additional embodiments, adjusting operation of the agricultural vehicle 102 and/or the implement 122 may include actuating one or more hydraulic valves of the agricultural vehicle 102 and/or the implement 122. For example, adjusting operation of the agricultural vehicle 102 and/or the implement 122 may include actuating one or more hydraulic valves to change an orientation and/or position of the implement (e.g., lift a mower). In one or more embodiments, adjusting operation of the agricultural vehicle 102 and/or the implement 122 may include both cutting power to the implement 122 and actuating one or more hydraulic valves of the agricultural vehicle 102 and/or the implement 122. The alarm described above in regard to act 508 may be output simultaneously to adjusting operation of the agricultural vehicle 102 and/or the implement 122.

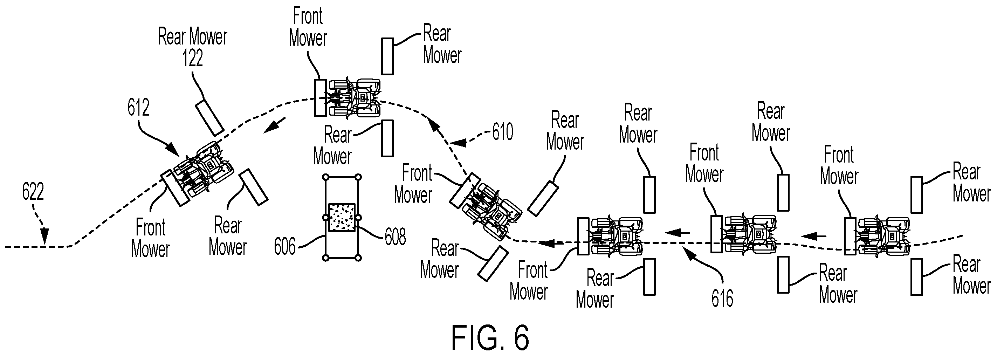

Adjusting operation of the agricultural vehicle is described in greater detail in regard to FIG. 6 through FIG. 10.

FIG. 6 shows an agricultural vehicle 612 with an implement 122 (in this example, a mower combination) coupled to the agricultural vehicle 612. The agricultural vehicle 612 is depicted at various locations and positions along a path traveled. Furthermore, FIG. 6 shows a detected object 608, detected via any of manners described herein, and a geofence 606 defined around the detected object 608 (i.e., detected object of interest).

As shown in FIG. 6, in some embodiments, adjusting operation of the agricultural vehicle 612 may include, when the agricultural vehicle 612 is moving along an initial path of travel 616 that would either intersect with detected object 608 and/or geofence 606 or cause the agricultural vehicle 612 to come within a given distance of the detected object 608 and/or geofence 606, causing the agricultural vehicle 612 to divert and navigate around the detected object 608 and geofence 606 along a diverted path of travel 610 and ultimately return a subsequent path of travel 622 that is at least substantially collinear to an initial path of travel 616. As noted above, adjustment to operation of the agricultural vehicle 612 may occur during a pass within a given field that is subsequent to a pass during which the detected object 608 was detected and the geofence 606 was generated.

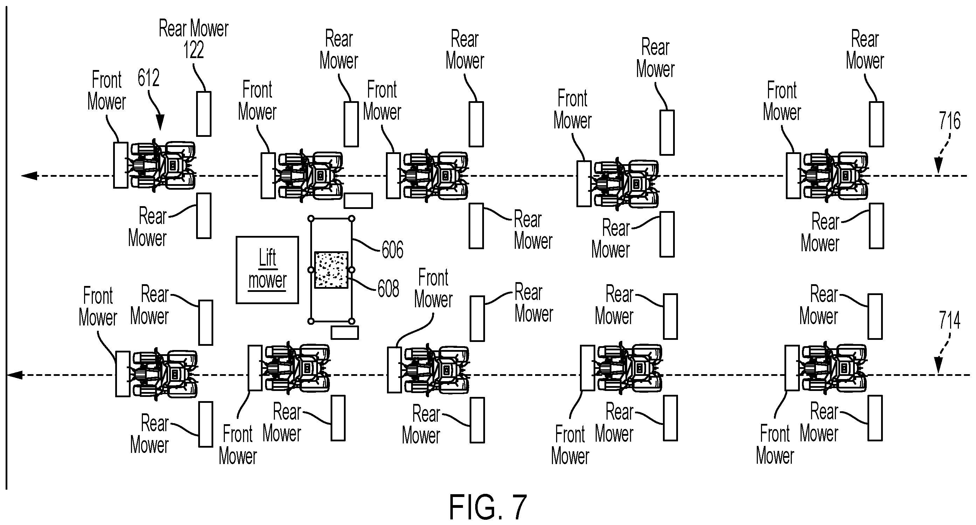

FIG. 7 shows an agricultural vehicle 612 with an implement 122 (in this example, a mower combination) coupled to the agricultural vehicle 612. The agricultural vehicle 612 is depicted at various locations and positions along a first pass 714 traveled and a subsequent second pass 716 traveled. Furthermore, FIG. 7 shows a detected object 608, detected via any of manners described herein, and a geofence 606 defined around the detected object 608.

As shown in FIG. 7, in some embodiments, adjusting operation of the agricultural vehicle 612 may include, while traveling along a pass within a given field (e.g., a first pass 714) during which the detected object 608 was detected and the geofence 606 was generated, causing the implement 122 to change position and/or orientation to avoid the detected object 608, and during a subsequent pass within the given field (e.g., the second pass 716), also causing the implement 122 to change position and/or orientation the detected object 608. Furthermore, changing the position and/or the orientation of the implement 122 may include lifting the implement 122 and/or moving the implement 122 (e.g. a given mower unit) to a folded position relative to the agricultural vehicle 612 (e.g., folding the implement 122).

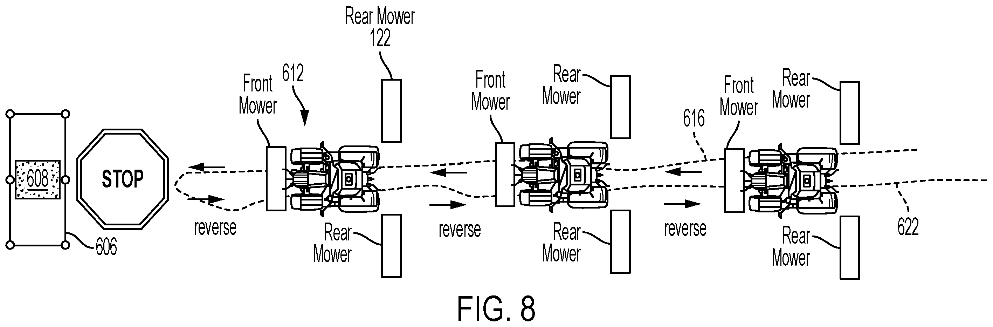

FIG. 8 shows an agricultural vehicle 612 with an implement 122 (in this example, a mower combination) coupled to the agricultural vehicle 612. The agricultural vehicle 612 is depicted at various locations and positions along a path traveled. Furthermore, FIG. 8 shows a detected object 608, detected via any of manners described herein, and a geofence 606 defined around the detected object 608.

As shown in FIG. 8, in some embodiments, adjusting operation of the agricultural vehicle 612 may include, when the agricultural vehicle 612 is moving along an initial path of travel 616 that would either intersect with detected object 608 and/or geofence 606 or cause the agricultural vehicle 612 to come within a given distance of the detected object 608 and/or geofence 606, causing the agricultural vehicle 612 to stop and reverse travel for at least some distance along a subsequent path of travel 622 that is parallel to the initial path of travel 616 but in an opposite direction. As noted above, adjustment to operation of the agricultural vehicle 612 may occur during a pass within a given field that is subsequent to a pass during which the detected object 608 was detected and the geofence 606 was generated, or adjustment to operation of the agricultural vehicle 612 may occur during a pass within which the detected object 608 was detected and the geofence 606 was generated.

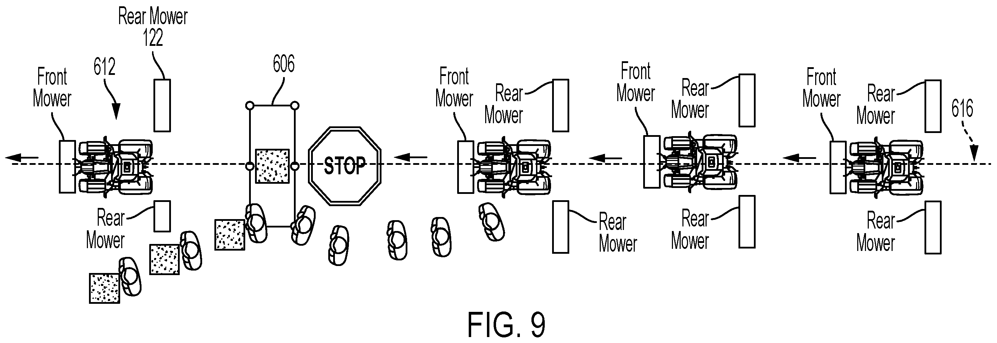

FIG. 9 shows an agricultural vehicle 612 with an implement 122 (in this example, a mower combination) coupled to the agricultural vehicle 612. The agricultural vehicle 612 is depicted at various locations and positions along a path traveled. Furthermore, FIG. 9 shows a detected object 608, detected via any of manners described herein, and a geofence 606 defined around the detected object 608.

As shown in FIG. 9, in some embodiments, adjusting operation of the agricultural vehicle 612 may include, when the agricultural vehicle 612 is moving along an initial path of travel 616 that would either intersect with detected object 608 and/or geofence 606 or cause the agricultural vehicle 612 to come within a given distance of the detected object 608 and/or geofence 606, causing the agricultural vehicle 612 to stop prior to intersecting with the detected object 608 and/or geofence 606 or coming within a given distance of the detected object 608 and/or geofence 606 and prompting an operator (e.g., via a display of the guidance system 118 and/or the control system 128) to verify the presence of the detected object 608 and/or cause the detected object 608 to move. As noted above, adjustment to operation of the agricultural vehicle 612 may occur during a pass within a given field that is subsequent to a pass during which the detected object 608 was detected and the geofence 606 was generated, or adjustment to operation of the agricultural vehicle 612 may occur during a pass within which the detected object 608 was detected and the geofence 606 was generated.

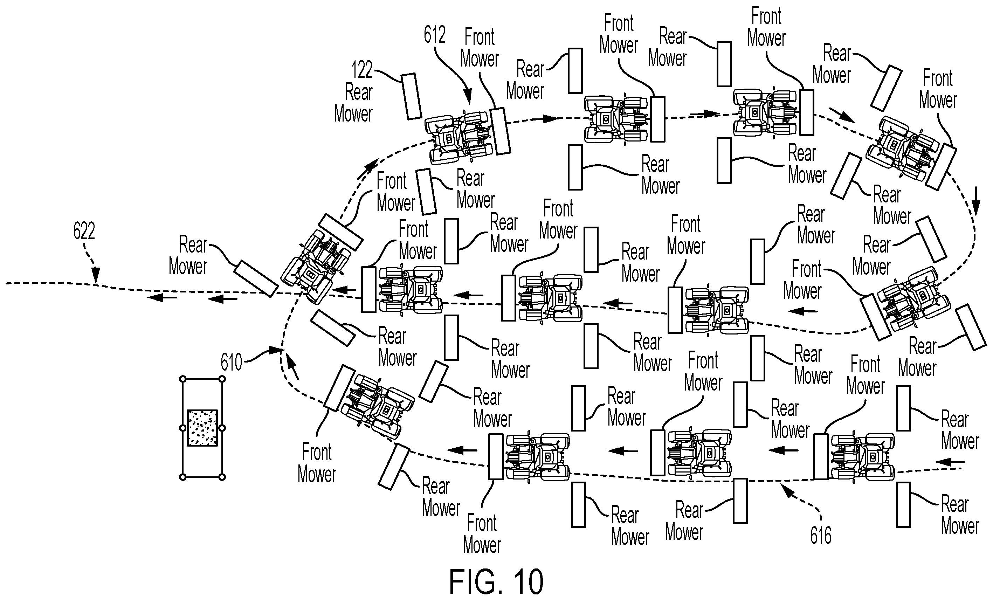

FIG. 10 shows an agricultural vehicle 612 with an implement 122 (in this example, a mower combination) coupled to the agricultural vehicle 612. The agricultural vehicle 612 is depicted at various locations and positions along a path traveled. Furthermore, FIG. 10 shows a detected object 608, detected via any of manners described herein, and a geofence 606 defined around the detected object 608.

As shown in FIG. 10, in some embodiments, adjusting operation of the agricultural vehicle 612 may include, when the agricultural vehicle 612 is moving along an initial path of travel 616 that would either intersect with detected object 608 and/or geofence 606 or cause the agricultural vehicle 612 to come within a given distance of the detected object 608 and/or geofence 606, causing the agricultural vehicle 612 to divert and navigate along a diverted path of travel 610 and onto a subsequent path of travel 622 that is at least substantially parallel to and offset from an initial path of travel 616 and that avoids intersecting with and/or coming within a given distance of the detected object 608 and/or geofence 606. As noted above, adjustment to operation of the agricultural vehicle 612 may occur during a pass within a given field that is subsequent to a pass during which the detected object 608 was detected and the geofence 606 was generated, or adjustment to operation of the agricultural vehicle 612 may occur during a pass within which the detected object 608 was detected and the geofence 606 was generated.

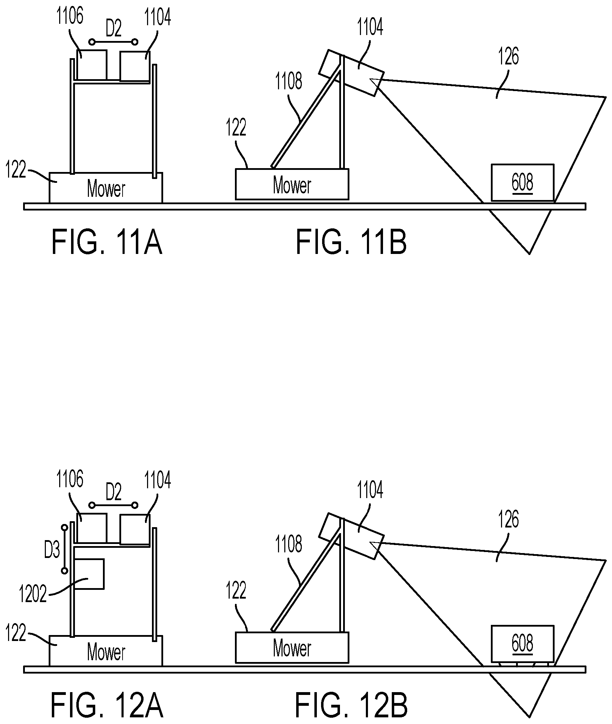

FIG. 11A is a side schematic view of an implement 122 (e.g., a mower) with a first image sensor 1104 and a second image sensor 1106 coupled to the implement 122. FIG. 11B is a rear schematic view of the implement 122, the first image sensor 1104, and the second image sensor 1106 of FIG. 11A.

Referring to FIG. 11A and FIG. 11B together, the first image sensor 1104 and the second image sensor 1106 may be coupled to the implement 122 by way of a frame 1108 mounted to the implement 122. The frame 1108 may extend upward from the implement 122. Additionally, the first image sensor 1104 and the second image sensor 1106 may be coupled to the frame 320 in manner and is oriented such that the fields of view 126 of the first image sensor 1104 and the second image sensor 1106 include angled downward views of the environment (e.g., ground and/or vegetation) around the agricultural vehicle 102 (FIG. 1). In some embodiments, the first image sensor 1104 and the second image sensor 1106 may be mounted to the frame 1108 at substantially a same elevation. In some embodiments, the frame 1108 may include one or more of the arm members 202 and/or actuators described above, and the arm members 202 and/or actuators may be utilized via any of the manners described herein to manipulate an orientation and location of the first image sensor 1104 and the second image sensor 1106 relative to the agricultural vehicle 102 (FIG. 1) and/or implement 122.

As noted above, a horizontal distance (D) (FIG. 3A) between each of the first image sensor 1104 and the second image sensor 1106 and the agricultural vehicle 102 (FIG. 1) and/or the implement 122 may be selected and known via any of the manners described herein. Furthermore, elevations (H) (FIG. 3A) at which the first image sensor 1104 and the second image sensor 1106 are mounted above the implement 122 via the frame 1108 may be selected and known via any of the manners described herein in regard to the distance (D). Likewise, a horizontal distance (D2) between the first image sensor 1104 and the second image sensor 1106 may be selected and known. As result, the orientation of the field of view 126 of the first image sensor 1104 relative to the field of view of the second image sensor 1106 may be selected and known. Additionally, the orientation of the field of view 126 of the first image sensor 1104 and the orientation of the field of view of the second image sensor 1106 relative to the agricultural vehicle 102 (FIG. 1) and/or the implement 122 may be selected and known.

In some embodiments, the first image sensor 1104 may include a thermal camera. For example, the first image sensor 1104 may include a long-wave infrared (LWIR) camera. In additional embodiments, the first image sensor 1104 may include one or more of a mid-wave infrared (MWIR) camera, a short-wave infrared (SWIR) camera, an ultraviolet camera (UV camera), a visible light camera with an infrared filter, a light detection and ranging (LIDAR) camera, a near infrared camera (NIR), an RGB camera, or a polarized camera

In some embodiments, the second image sensor 1106 may include an additional thermal camera. For example, the second image sensor 1106 may include a long-wave infrared (LWIR) camera. In additional embodiments, the second image sensor 1106 may include one or more of a mid-wave infrared (MWIR) camera, a short-wave infrared (SWIR) camera, an ultraviolet camera (UV camera), a visible light camera with an infrared filter, a light detection and ranging (LIDAR) camera, a near infrared camera (NIR), an RGB camera, or a polarized camera.

In additional embodiments, the second image sensor 1106 includes one of a light detection and ranging (LIDAR) camera, a near infrared camera (NIR), an RGB camera, or a polarized camera.

FIG. 12A is a side schematic view of an implement 122 (e.g., a mower) with a first image sensor 1104, a second image sensor 1106, and third image sensor 1202 coupled to the implement 122. FIG. 12B is a rear schematic view of the implement 122, the first image sensor 1104, and the second image sensor 1106 of FIG. 12A.

Referring to FIG. 12A and FIG. 12B together, the first image sensor 1104, the second image sensor 1106, and the third image sensor 1202 may be coupled to the implement 122 by way of a frame 1108 mounted to the implement 122. The frame 1108 may extend upward from the implement 122. Additionally, the first image sensor 1104, the second image sensor 1106, and the third image sensor 1202 may be coupled to the frame 320 in manner and is oriented such that the fields of view 126 of the first image sensor 1104, the second image sensor 1106, and the third image sensor 1202 include angled downward views of the environment (e.g., ground and/or vegetation) around the agricultural vehicle 102 (FIG. 1). In some embodiments, the first image sensor 1104 and the second image sensor 1106 may be mounted to the frame 1108 at substantially a same elevation. Additionally, the third image sensor 1202 may be mounted to the frame 1108 at an elevation below or above the first image sensor 1104 and the second image sensor 1106. In some embodiments, the frame 1108 may include one or more of the arm members 202 and/or actuators described above, and the arm members 202 and/or actuators may be utilized via any of the manners described herein to manipulate an orientation and location of the first image sensor 1104, the second image sensor 1106, and the third image sensor 1202 relative to the agricultural vehicle 102 (FIG. 1) and/or implement 122.

As noted above, a horizontal distance (D) (FIG. 3A) between each of the first image sensor 1104, the second image sensor 1106, and the third image sensor 1202 and the agricultural vehicle 102 (FIG. 1) and/or the implement 122 may be selected and known via any of the manners described herein. Furthermore, elevations (H) (FIG. 3A) at which the first image sensor 1104, the second image sensor 1106, and the third image sensor 1202 are mounted above the implement 122 via the frame 1108 may be selected and known via any of the manners described herein in regard to the distance (D). Likewise, as noted above, a horizontal distance (D2) between the first image sensor 1104 and the second image sensor 1106 may be selected and known. As result, the orientation of the field of view 126 of the first image sensor 1104 relative to the field of view of the second image sensor 1106 may be selected and known. Additionally, the orientation of the field of view 126 of the first image sensor 1104 and the orientation of the field of view of the second image sensor 1106 relative to the agricultural vehicle 102 (FIG. 1) and/or the implement 122 may be selected and known. Moreover, a vertical distance (D3) between the elevation of the third image sensor 1202 and the elevation of the first image sensor 1104 and the second image sensor 1106 may be selected and known. As result, the orientation of the field of view 126 of the third image sensor 1202 relative to the fields of view of the first image sensor 1104 and the second image sensor 1106 may be selected and known. Additionally, the orientation of the field of view 126 of the first image sensor 1104 and the orientation of the field of view 126 of the third image sensor 1202 relative to the agricultural vehicle 102 (FIG. 1) and/or the implement 122 may be selected and known.

In some embodiments, the first image sensor 1104 may include a thermal camera. For example, the first image sensor 1104 may include a long-wave infrared (LWIR) camera. In additional embodiments, the first image sensor 1104 may include one or more of a mid-wave infrared (MWIR) camera, a short-wave infrared (SWIR) camera, an ultraviolet camera (UV camera), a visible light camera with an infrared filter, an RGB camera, a light detection and ranging (LIDAR) camera, a near infrared camera (NIR), or a polarized camera.

Additionally, as noted above, the second image sensor 1106 may include an additional thermal camera. For example, the second image sensor 1106 may include a long-wave infrared (LWIR) camera. In additional embodiments, the second image sensor 1106 may include one or more of a mid-wave infrared (MWIR) camera, a short-wave infrared (SWIR) camera, an ultraviolet camera (UV camera), a light detection and ranging (LIDAR) camera, a near infrared camera (NIR), a polarized camera, or a visible light camera with an infrared filter.

Furthermore, the third image sensor may include one of a light detection and ranging (LIDAR) camera, a near infrared camera (NIR), a short-wave infrared (SWIR) camera, an RGB camera, or a polarized camera.

As is discussed in greater detail below, image data from the third image sensor 1202 may be utilized in conjunction with the image data from the first image sensor 1104 and the second image sensor 1106 to generate three-dimensional information about a shape and a distance of objects surrounding the agricultural vehicle 102 (FIG. 1) and/or the implement 122. In particular, utilizing the image data from the first image sensor 1104, the second image sensor 1106, and the third image sensor 1202, the guidance system 118 (FIG. 1) to generate one or more environmental models of an environment around the agricultural vehicle 102 (FIG. 1) and/or the implement 122 during an agricultural operation.

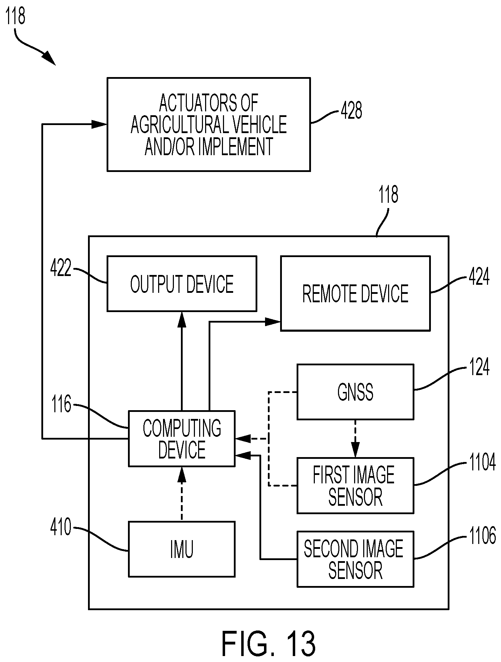

FIG. 13 is a schematic view of the guidance system 118 according to one or more embodiments of the disclosure. The guidance system 118 may include the computing device 116, the first image sensor 1104, the second image sensor 1106, the inertial measurement unit 410, the remote device 424, the output device 422, and the GNSS 124. The GNSS 124, the first image sensor 1104, the second image sensor 1106, the inertial measurement unit 410, and the GNSS 124 may be in operable communication with computing device 116 and may be configured to provide data to the computing device 116. The computing device 116 may be further operably coupled to the actuators 428 of the agricultural vehicle 102 and/or the implement 122. In additional embodiments, the first image sensor 1104, the second image sensor 1106, the inertial measurement unit 410, the remote device 424, the output device 422, and/or the GNSS 124 may be separate and distinct from the guidance system 118 and may be in operable communication with the guidance system 118. For instance, one or more of the first image sensor 1104, the second image sensor 1106, the inertial measurement unit 410, the remote device 424, the output device 422, and the GNSS 124 may be remote to the computing device 116.

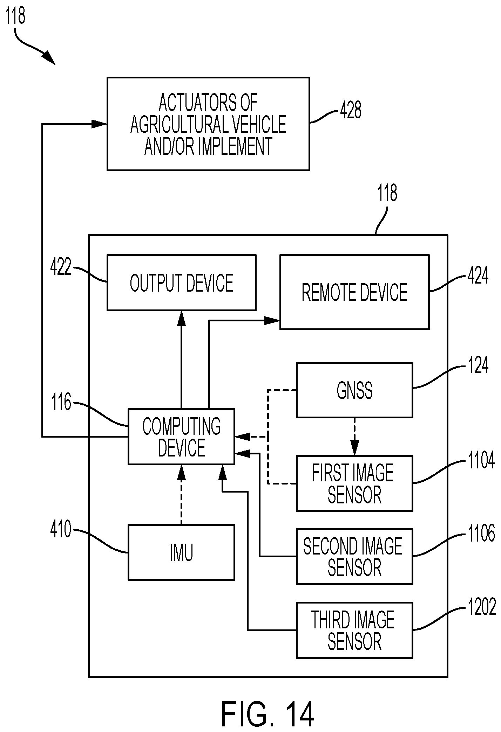

FIG. 14 is a schematic view of the guidance system 118 according to one or more embodiments of the disclosure. The guidance system 118 may include the computing device 116, the first image sensor 1104, the second image sensor 1106, the third image sensor 1202, the inertial measurement unit 410, the remote device 424, the output device 422, and the GNSS 124. The GNSS 124, the first image sensor 1104, the second image sensor 1106, the third image sensor 1202, the inertial measurement unit 410, and the GNSS 124 may be in operable communication with computing device 116 and may be configured to provide data to the computing device 116. The computing device 116 may be further operably coupled to the actuators 428 of the agricultural vehicle 102 and/or the implement 122. In additional embodiments, the first image sensor 1104, the second image sensor 1106, the third image sensor 1202, the inertial measurement unit 410, the remote device 424, the output device 422, and/or the GNSS 124 may be separate and distinct from the guidance system 118 and may be in operable communication with the guidance system 118. For instance, one or more of the first image sensor 1104, the second image sensor 1106, the third image sensor 1202, the inertial measurement unit 410, the remote device 424, the output device 422, and the GNSS 124 may be remote to the computing device 116.

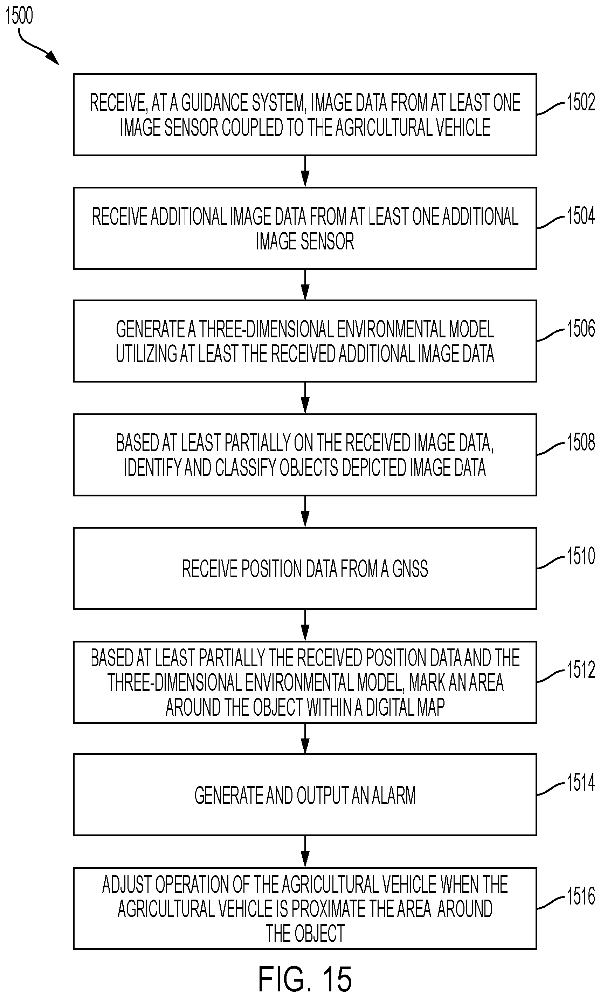

FIG. 15 shows a flowchart of a method 1500 of controlling operation an agricultural vehicle 102 (e.g., a tractor) and/or an implement 122 during an agricultural operation (e.g., a mowing operation, a planting operation, a harvesting operation, etc.) according to one or more embodiments of the disclosure. In one or more embodiments, the guidance system 118 may perform one or more acts of the method 1500. Additionally, in some embodiments, one or more acts of the method 1500 may be performed by the control system 128 of the agricultural vehicle 102 and/or a remote device.

In some embodiments, the method 1500 may include receiving image data from at least one image sensor, as shown in act 1502 of FIG. 15. For example, the computing device 116 of the guidance system 118 may receive the image data from one or more of the first image sensor 1104 and the second image sensor 1106. In one or more embodiments, each of the first image sensor 1104 and the second image sensor 1106 may include any of the image sensors described herein. For instance, one or more of the first image sensor 1104 and the second image sensor 1106 may include an RGB camera, and the other of the first image sensor 1104 and the second image sensor 1106 may include a thermal camera. The image data may include any of the image data described above.

Additionally, the method 1500 may include receiving additional image data from at least one additional image sensor, as show in act 1504 of FIG. 15. For instance, the computing device 116 of the guidance system 118 may receive the additional image data from the third image sensor 1202. The additional image data may include three-dimensional image data. For instance, the third image sensor 1202 may include a LIDAR camera, and the three-dimensional image data may include three-dimensional information about the environment around the agricultural vehicle 102 and/or the implement.

The method 1500 may also include generating a three-dimensional environmental model (e.g., three-dimensional geospatial map) utilizing at least the received additional image data, as shown in act 1506 of FIG. 15. For example, the computing device 116 of the guidance system 118 may generate the three-dimensional (3D) environmental model (e.g., a 3D map) of a given area for which image data was captured. In some embodiments, generating the three-dimensional environmental model may include generating a virtual map of an environment perceived by the third image sensor 1202 via one or more know methods of generating 3D models using LIDAR data.

Based at least partially on the received thermal data, the method 1500 may include analyzing the image data to identify and classify objects depicted within the image data, as shown in act 1508 of FIG. 15. For example, the computing device 116 of the guidance system 118 may analyze the image data to identify and classify objects depicted in the image data via any of the manners described above in regard to FIG. 5. Furthermore, analyzing the image data may include analyzing LIDAR point cloud data captured by the third image sensor 1202. The analysis may accurately distinguish between different types of objects based on the object's shape, size, and reflective properties. In some embodiments, the guidance system 118 may use pre-trained models to identify and classify objects. For anomaly detection, the guidance system 118 may apply unsupervised learning techniques to detect deviations from normal environments (e.g., normal roadside environments) and may flag detected anomalies for further inspection.

Additionally, the method 1500 may include receiving location (e.g., position) data from the GNSS 124 as shown in act 1510 of FIG. 15. For example, the computing device 116 of the guidance system 118 may receive location data from the GNSS 124 via any of the manners described above in regard to FIG. 5, and the location data may include any of the location data described above.

Based at least partially on the received location data and the generated three-dimensional environmental model, the method 1500 may include marking the object within the digital map, as shown in act 1512 of FIG. 15. For instance, the computing device 116 of the guidance system 118 may mark a location of the object within the digital map based at least partially on the received location data and the generated three-dimensional environmental model. In some embodiments, marking the location of object within the digital map may include marking an area around the object. Furthermore, the method 1500 may include generating any of the maps described above in regard to FIG. 5.

In some embodiments, determining the location of the object may further include mapping the object on a map (e.g., a digital map) utilized by the guidance system. In one or more embodiments, determining the location of the object may include generating a geofence (e.g., a virtual boundary and/or perimeter) around the object. For instance, the guidance system 118 may generate a geofence within a digital map utilized to guide a path of travel of the agricultural vehicle (e.g., an agricultural vehicle 102). In some embodiments, a mapping software may be utilized to generate the geofence. The geofence may have a square, polygon, oval, circle, or irregular shape.

In one or more embodiments, determining the location of the object may optionally include receiving navigational data from the inertial measurement unit 410 and determining the location of the object based at least partially on the received navigational data. For example, the guidance system 118 (e.g., the computing device 116 of the guidance system 118) may receive the navigational data from the inertial measurement unit 410. In some embodiments, the navigational data may include one or more of specific force data, attitude data, velocity data, angular rate data, and/or an orientation data of the agricultural vehicle (e.g., the agricultural vehicle 102) and/or implement relative to a reference (e.g., ground surface). The inclusion of navigational data from the inertial measurement unit 410 may enhance the guidance system's accuracy and reliability by providing additional data on orientation, velocity, and gravitational forces, which may help in compensating for any GNSS signal degradation due to environmental factors.

Responsive the determining the location of the object, the type and location of the object may be logged (e.g., stored) within the memory of the guidance system 118 via any of the manners described herein in regard to FIG. 5.

In some embodiments, the method 1500 may, optionally, further include generating and outputting an alarm, as shown in act 1514 of FIG. 15. For example, the guidance system 118 may, optionally, generate and output an alarm according to any of the manners described above in regard to FIG. 5.

Additionally, the method 1500 may include, responsive to determining a location of the object, adjusting operation of the agricultural vehicle and/or the implement, as shown in act 1516 of FIG. 15. For example, the guidance system 118 (e.g., the computing device 116 of the guidance system 118) may adjust operation or send signals to the control system 128 to adjust operation of the agricultural vehicle and/or the implement 122 according to any of the manners described above in regard to FIG. 5 through FIG. 10.

FIG. 16 shows a flowchart of a method 1600 of controlling operation an agricultural vehicle 102 (e.g., a tractor) and/or an implement 122 during an agricultural operation (e.g., a mowing operation, a planting operation, a harvesting operation, etc.) according to one or more embodiments of the disclosure. In one or more embodiments, the guidance system 118 may perform one or more acts of the method 1600. Additionally, in some embodiments, one or more acts of the method 160000 may be performed by the control system 128 of the agricultural vehicle 102 and/or a remote device.

The method 1600 may include receiving image data from at least one image sensor coupled to the agricultural vehicle 102, as shown in act 1602 of FIG. 16. For example, the computing device 116 of the guidance system 118 may receive the image data from one or more of the first image sensor 1104 and the second image sensor 1106. In one or more embodiments, each of the first image sensor 1104 and the second image sensor 1106 may include any of the image sensors described herein. For instance, of the first image sensor 1104 and the second image sensor 1106 may include an RGB camera, and the other of the first image sensor 1104 and the second image sensor 1106 may include a LWIR camera. The image data may include any of the image data described above.

The method 1600 may also include receiving additional image data from at least one additional image sensor, as shown in act 1604 of FIG. 16. For instance, the computing device 116 of the guidance system 118 may receive the additional image data from the third image sensor 1202. The additional image data may include three-dimensional image data. For instance, the third image sensor 1202 may include a LiDAR camera, and the three-dimensional image data (e.g., three-dimensional information about the environment around the agricultural vehicle 102 and/or the implement.

The method 1600 may also include generating a three-dimensional environmental model based at least the received additional image data and the received image data, as shown in act 1606 of FIG. 16. For example, the computing device 116 of the guidance system 118 may generate the three-dimensional (3D) environmental model. In some embodiments, generating the three-dimensional environmental model may include generating a virtual map of an environment perceived by the third image sensor 1202 via one or more know methods of generating 3D models using LiDAR data.

Based at least partially on the received image data, the method 1600 may include analyzing the image data to identify and classify objects depicted in the image data, as shown in act 1608 of FIG. 16. For example, the computing device 116 of the guidance system 118 may analyze the thermal image data to identify heat signatures depicted in the image data via any of the manners described above in regard to FIG. 5 and FIG. 15.

The method 1600 may further include analyzing image data in conjunction with the three-dimensional environmental model to determine a location of the object relative to the agricultural vehicle, as shown in act 1610 of FIG. 16. For example, the computing device 116 of the guidance system 118 may analyze the image data according to any of the manners described above in regard to FIG. 5 and FIG. 15. However, method 1600 may not utilize a GNSS, a GPS, or location data related to a GNSS or a GPS. Rather, the location of the object may only be determined relative to the agricultural vehicle and/or within a given field within which the agricultural vehicle 102 is performing the agricultural operation.

Additionally, the method 1600 may include generating and outputting an alert indicating the presence of the object and the location of the object relative to the agricultural vehicle 102, as shown in act 1612 of FIG. 16. For example, the computing device 116 of the guidance system 118 may generate and output an alert indicating the presence of the object and the location of the object relative to the agricultural vehicle 102 and/or according to any of the manners described above in regard to FIG. 5.

In some embodiments, the alert may include an audible alert. In additional embodiments, the alert may include a visual alert. For instance, outputting the alert may displaying an indication of the presence of the object on a display (e.g., the input/output device 120). The indication may include information regarding the type of the object and a location of the object relative to the agricultural vehicle 102. In some embodiments, the alert may include a visual representation of the detected object on a display.

In some embodiments, the method 1600 may optionally include outputting a recommendation to adjust operation of the agricultural vehicle 102 responsive to the presence of the object. The recommendation may include a recommendation to modify a path of travel of the agricultural vehicle to avoid the object. The recommendation may include a recommendation to stop movement of the agricultural vehicle and reverse the agricultural vehicle for at least some distance. The recommendation may include a recommendation to change an orientation of an implement coupled to the agricultural vehicle. The visual representation may include a depiction of the three-dimensional environmental model with the location of the object marked on the three-dimensional environmental model. The visual representation may include the received thermal image data.

Referring to FIGS. 1 through 16 together, embodiments of the present disclosure may provide advantages over conventional agricultural vehicles and implements. For example, the embodiments desribed herein may improve safety and operational efficiency. Moreover, the embodiments described herein provide enhanced abilities to detect hidden obstacles and real-time warnings that prevent equipment damage, reduce repair costs, and prevent service interruptions. Furthermore, embodiments of the present disclosure provide a dual-trigger system that increases reliability in detecting objects under varying vegetation conditions. Additionally, by integrating the image sensors described herein and GNSS, roadside mowing operations can be significantly optimized, improving safety, efficiency, and protection of both the agricultural vehicle, implement, and roadside infrastructure.

Additionally, the automated detection described herein improves efficiency by enabling operators to focus on agricultural operations without constantly monitoring for obstacles. Moreover, the remote device enables remote operators to assess and address issues without the need for immediate on-site presence, which saves time and resources. Furthermore, embodiments described herein enable targeted maintenance based on object conditions, reducing unnecessary inspections. Likewise, embodiments described herein improve road safety by detecting and recording roadside markers (e.g., reflective markers), which can result in the roadside markers being better maintained, improving visibility and safety for road users. Embodiments described herein further improve maintenance planning by generating detailed geospatial maps. By incorporating a detection, evaluation, and logging system, roadside maintenance operations can become more efficient, resulting in better service of traffic reflective markers and enhancing overall road safety.

Moreover, embodiments described herein may promote the growth of desired vegetation and help to control invasive species, while contributing to a healthier ecosystem. Embodiments described herein reduce the need for manual vegetation surveys by providing automated detection and classification. Embodiments described herein facilitate informed decisions on where to focus vegetation management efforts based on accurate, real-time data. Embodiments described herein assist in allocating resources more effectively by targeting areas with high densities of invasive species for intervention. By incorporating the vegetation mapping and management system described herein, roadside maintenance operations can become more efficient and effective in promoting biodiversity and controlling invasive species.

Likewise, embodiments described herein help to maintain cleaner roadsides by identifying and targeting areas with high concentrations of refuse. Embodiments described herein reduce the need for manual surveys by providing automated detection and classification of garbage. Embodiments described herein facilitate informed decisions on where to focus cleanup efforts based on accurate, real-time data. Embodiments described herein assist in allocating resources more effectively by targeting areas with significant refuse accumulation. By incorporating the detection and mapping system described herein, roadside maintenance operations can become more efficient and effective in keeping roadsides clean and safe from litter and debris.

FIG. 17 is a schematic view of the control system 128 and/or the computing device 116 of the guidance system 118, which may operate the guidance system 118 according to some embodiments of the disclosure. The control system 128 may include a communication interface 1702, a processor 1704, a memory 1706, a storage device 1708, and a bus 1710 in addition to the input/output device 1712.

In some embodiments, the processor 1704 includes hardware for executing instructions, such as those making up a computer program. As an example, and not by way of limitation, to execute instructions, the processor 1704 may retrieve (or fetch) the instructions from an internal register, an internal cache, the memory 1706, or the storage device 1708 and decode and execute them. In some embodiments, the processor 1704 may include one or more internal caches for data, instructions, or addresses. As an example, and not by way of limitation, the processor 1704 may include one or more instruction caches, one or more data caches, and one or more translation look aside buffers (TLBs). Instructions in the instruction caches may be copies of instructions in the memory 1706 or the storage device 1708.

The memory 1706 may be coupled to the processor 1704. The memory 1706 may be used for storing data, metadata, and programs for execution by the processor(s). The memory 1706 may include one or more of volatile and non-volatile memories, such as Random-Access Memory ("RAM"), Read-Only Memory ("ROM"), a solid state disk ("SSD"), Flash, Phase Change Memory ("PCM"), or other types of data storage. The memory 1706 may be internal or distributed memory.

The storage device 1708 may include storage for storing data or instructions. As an example, and not by way of limitation, storage device 1708 can comprise a non-transitory storage medium described above. The storage device 1708 may include a hard disk drive (HDD), a floppy disk drive, Flash memory, an optical disc, a magneto-optical disc, magnetic tape, or a Universal Serial Bus (USB) drive or a combination of two or more of these. The storage device 1708 may include removable or non-removable (or fixed) media, where appropriate. The storage device 1708 may be internal or external to the computing storage device 1708. In one or more embodiments, the storage device 1708 is non-volatile, solid-state memory. In other embodiments, the storage device 1708 includes read-only memory (ROM). Where appropriate, this ROM may be mask programmed ROM, programmable ROM (PROM), erasable PROM (EPROM), electrically erasable PROM (EEPROM), electrically alterable ROM (EAROM), or Flash memory or a combination of two or more of these.

The communication interface 1702 can include hardware, software, or both. The communication interface 1702 may provide one or more interfaces for communication (such as, for example, packet-based communication) between the guidance system 118 and one or more other computing devices or networks (e.g., a server, etc.). As an example, and not by way of limitation, the communication interface 1702 may include a network interface controller (NIC) or network adapter for communicating with an Ethernet or other wire-based network or a wireless NIC (WNIC) or wireless adapter for communicating with a wireless network, such as a WI-FI.

In some embodiments, the bus 1710 (e.g., a Controller Area Network (CAN) bus) may include hardware, software, or both that couples components of guidance system 118 to each other and to external components.

The input/output device 1712 may allow an operator of the agricultural vehicle 102 to provide input to, receive output from, and otherwise transfer data to and receive data from guidance system 118 of the control system 128. The input/output device 1712 may include a mouse, a keypad or a keyboard, a joystick, a touch screen, a camera, an optical scanner, network interface, modem, other known I/O devices or a combination of such I/O interfaces. The input/output device 1712 may include one or more devices for presenting output to an operator, including, but not limited to, a graphics engine, a display (e.g., a display screen), one or more output drivers (e.g., display drivers), one or more audio speakers, and one or more audio drivers. In certain embodiments, the input/output device 1712 is configured to provide graphical data to a display for presentation to an operator. The graphical data may be representative of one or more graphical user interfaces and/or any other graphical content as may serve a particular implementation. The input/output device 1712 may be utilized to display data (e.g., images and/or video data) received from the one or more image sensors and provide one or more recommendations of adjusting operation of the agricultural vehicle 102 and/or the implement 122 and/or video data to assist an operator in navigating the agricultural vehicle 102 and implement 122.

All references cited herein are incorporated herein in their entireties. If there is a conflict between definitions herein and in an incorporated reference, the definition herein shall control.

The embodiments of the disclosure described above and illustrated in the accompanying drawings do not limit the scope of the disclosure, which is encompassed by the scope of the appended claims and their legal equivalents. Any equivalent embodiments are within the scope of this disclosure. Indeed, various modifications of the disclosure, in addition to those shown and described herein, such as alternate useful combinations of the elements described, will become apparent to those skilled in the art from the description. Such modifications and embodiments also fall within the scope of the appended claims and equivalents.

## Claims

1. A guidance system for controlling operation of an agricultural vehicle, comprising:
at least one processor; and
at least one non-transitory computer-readable storage medium storing instructions thereon that, when executed by the at least one processor, cause the guidance system, during an agricultural process, to:
receive image data from an image sensor;
analyze the image data to identify and classify one or more water wells depicted within the image data;
receive GNSS location data;
responsive to identifying and classifying one or more water wells, log location data indicating locations of the one or more water wells; and
based at least partially on the image data and the logged location data, generate a geospatial map indicating locations of the one or more water wells on the geospatial map.

2. The guidance system of claim 1, wherein the image sensor comprises at least one of a thermal camera, a light detection and ranging (LiDAR) camera, a short wave infrared (SWIR) camera, a near infrared camera (NIR), an RGB camera, or a polarized camera.

3. The guidance system of claim 1, wherein the guidance system comprises at least one additional image sensor comprising at least one of a thermal camera, a light detection and ranging (LIDAR) camera, a short wave infrared (SWIR) camera, a near infrared (NIR) camera, an RGB camera, or a polarized camera.

4. The guidance system of claim 1, wherein analyzing the image data comprises utilizing one or more machine learning models to identify and classify one or more water wells depicted within the image data.

5. The guidance system of claim 1, wherein analyzing the image data comprises analyzing one or more heat signatures depicted within the image data.

6. The guidance system of claim 1, further comprising instructions that, when executed by the at least one processor, cause the guidance system to, responsive to identifying and classifying one or more water wells, automatically, without operator input, adjust operation of the agricultural vehicle.

7. The guidance system of claim 1, wherein generating a geospatial map indicating locations of the one or more water wells on the geospatial map comprises generating a three-dimensional geospatial map.

8. The guidance system of claim 1, further comprising instructions that, when executed by the at least one processor, cause the guidance system to display the generated map on an input/output device of the guidance system.

9. The guidance system of claim 8, wherein displaying the generated map on the input/output device of the guidance system comprises displaying the generated map on a display within the agricultural vehicle.

10. The guidance system of claim 8, wherein displaying the generated map on the input/output device of the guidance system comprises displaying the generated map on a display of a remote device.

11. The guidance system of claim 1, wherein receiving image data comprises receiving LIDAR image data.

12. A method of guiding operation of an agricultural vehicle during an agricultural process, the method comprising:
receiving, at a guidance system, image data from at least one image sensor coupled to the agricultural vehicle;
based at least partially on the received image data, identifying and classifying objects depicted within the image data;
receiving GNSS location data;
responsive to identifying and classifying a water well, logging location data indicating a location of the identified and classified water well; and
based at least partially on the image data and the logged location data, generating a geospatial map indicating the location of the water well on the geospatial map.

13. The method of claim 12, further comprising providing captured image data depicting the identified water well and the logged location data to a remote device

14. The method of claim 12, wherein identifying and classifying objects depicted within the image data comprises utilizing one or more machine learning models to identify and classify one or more water wells depicted within the image data.

15. The method of claim 12, wherein generating a geospatial map indicating locations of the one or more water wells on the geospatial map comprises generating a three-dimensional geospatial map.
